# EUROPÄISCHE PATENTSCHRIFT

(11) **EP 2 353 477 B1**
(45) Veröffentlichungstag und Bekanntmachung des Hinweises auf die Patenterteilung: **24.10.2012**
(21) Anmeldenummer: 11152637.2
(22) Anmeldetag: 31.01.2011
(51) Int. Cl.: A47J 42/18, A47J 42/16, A47J 42/40

(54) **Mehrteilige universelle Mahl- und/oder Siebvorrichtung**
Multipart universal grinding and/or filter device
Dispositif de broyage et/ou criblage universel en plusieurs parties

(30) Priorität: 02.02.2010 DE 102010006590; 18.05.2010 DE 102010020866; 26.11.2010 DE 102010052720
(43) Veröffentlichungstag der Anmeldung: 10.08.2011
(73) Patentinhaber: KoMo GmbH, 64853 Otzberg-Lengfeld (DE)
(72) Erfinder: Koidl, Peter, 6361 Hopfgarten (AT); Mock, Wolfgang, 64853 Otzberg-Lengfeld (DE); Mohr, Thomas, 64354 Reinheim (DE)
(74) Vertreter: Meissner, Bolte & Partner

(56) Entgegenhaltungen:
- AT-B- 378 696

## Beschreibung

Die Erfindung betrifft eine mehrteilige universelle Mahl- und/oder Siebvorrichtung, umfassend ein Gehäuse-Statorteil, welches einen elektromotorischen Antrieb aufnimmt, einen Mahlsatz mit Mahlsteinanordnung und einen mit dem Mahlsatz verbindbaren Aufgabetrichter gemäß Oberbegriff des Patentanspruchs 1.

Aus dem Stand der Technik gemäß DE 30 21 368 A1 oder DE 43 26 926 C2 sind Haushaltsgetreide- oder Kornmühlen vorbekannt.

Derartige Mühlen weisen ein Mahlwerk auf, in dem ein durch einen Motor angetriebener unterer Mahlstein und ein drehfest gelagerter oberer Mahlstein durch einen Verstellmechanismus axial relativ zueinander verstellbar aufgenommen sind.

In der AT 378 696 B wird eine Haushaltmühle mit einem Einsatz offenbart, wobei die Kontur des Einsatzes im Wesentlichen der Kontur des vom unteren Gehäuseteil gebildeten Hohlraumes entspricht.

Weiterhin ist gemäß dem Stand der Technik im Mühlengehäuse eine Aufhängung vorhanden, wobei der obere Mahlstein an einem Mahlsteinträger befestigt ist und wobei der Motor an der Unterseite eines Mahlwerk-Basisteils fixiert wird, an dem sich der obere Mahlstein abstützt.

Bei einer alternativen vorbekannten Ausführungsform von Haushalts-Getreidemühlen kann zwischen dem Gehäuse und einem Elektromotor, der den Läuferstein antreibt, und einer oberen Lagerung für die Motorwelle des Elektromotors eine Verstelleinrichtung angeordnet werden, durch deren Verdrehen die Motorwelle zusammen mit dem Rotor und dem am unteren Ende der Motorwelle befestigten unteren Mahlstein, d.h. dem Läuferstein, in vertikaler Richtung verschiebbar ist. Durch die Verschiebe- oder Verstellbewegung kann die Feinheit des Mahlguts gewählt werden.

In vielen Fällen ist es auch wünschenswert, das für Haushaltszwecke erhaltene Mahlprodukt auch noch einem Siebvorgang zu unterwerfen, wofür üblicherweise Haushaltssiebe genutzt werden.

Aus dem Vorgenannten ist es Aufgabe der Erfindung, eine weiterentwickelte mehrteilige universelle Mahl- und/oder Siebvorrichtung anzugeben, die modulartig aufgebaut ist, wodurch insbesondere der Bereich um den angetriebenen Mahlstein einfach gereinigt werden kann. Gemäß einer weiteren Aufgabe der Erfindung soll eine einfache Möglichkeit für einen alternativen Siebbetrieb der Vorrichtung geschaffen werden.

Die Lösung der Aufgabe der Erfindung erfolgt durch die Mahl- und/oder Siebvorrichtung gemäß der Merkmalskombination nach Patentanspruch 1, wobei die Unteransprüche mindestens zweckmäßige Ausgestaltungen und Weiterbildungen darstellen.

Es wird demnach von einer mehrteiligen universellen Mahl- und/oder Siebvorrichtung umfassend ein Gehäuse-Statorteil, welches einen elektromotorischen Antrieb aufnimmt, ausgegangen. Weiterhin enthält die Vorrichtung einen Mahlein- oder -aufsatz mit Mahlsteinanordnung, wobei die Mahlsteinanordnung einen drehfesten sowie einen angetriebenen Mahlstein besitzt. Weiterhin ist ein Aufgabetrichter vorhanden, der mit dem Mahlsatz verbindbar ist. Alternativ kann ein Siebaufsatz anstelle des Aufgabetrichters am Mahlsatz angekoppelt werden.

Weiterhin ist die Mahlsteinanordnung des Mahlsatzes in einem zweiteiligen Aufnahmegehäuse befindlich, wobei beide Gehäuseteile zur Bildung eines Mahlspaltes in axialer Richtung relativ zueinander verstellbar sind. Diese Verstellung kann über eine Gewindeverbindung zwischen dem zweiteiligen Gehäuse realisiert werden.

Weiterhin ist ein zum Antrieb gerichtetes unteres Gehäuseteil so ausgebildet, dass es den rotierenden Mahlstein aufnehmen kann. Ein oberes Gehäuseteil nimmt den festen Mahlstein auf. Darüber hinaus ist am unteren Gehäuseteil ein Mahlgutaustritt ausgebildet, welcher mindestens teilweise das Gehäuse-Statorteil durchdringt.

Gemäß der Erfindung ist zum Zweck der leichten Reinigung des Mahlraumes ein aus einem flexiblen, verformbaren oder elastischen Material bestehender Einsatz vorgesehen, dessen Kontur im Wesentlichen dem vom unteren Gehäuseteil gebildeten Hohlraum entspricht und welcher einen Mahlgut leitenden, integralen Fortsatz umfasst, welcher in den vorerwähnten Mahlgutaustritt mindestens teilweise hineinreicht.

Der verformbar elastische Einsatz kann nach Entfernung des oberen Gehäuseteils mit festem Mahlstein und Demontage des rotierenden Mahlsteins sehr leicht entnommen, gereinigt und/oder ausgetauscht werden.

Insbesondere bei Einsatz der Vorrichtung für Personen, die allergischen Reaktionen unterliegen, kann zur Vermeidung gesundheitlicher Beeinträchtigungen jeweils ein individueller Einsatz Verwendung finden, der z. B. auch farblich gekennzeichnet oder durchgefärbt ausführbar ist.

In Ausgestaltung dieser Ausführungsform der Erfindung weist der Einsatz einen umlaufenden Flansch auf, welcher in Auflage mit der Oberkante des unteren Gehäuseteils bringbar ist. Wird dann das obere Gehäuseteil aufgesetzt, entsteht eine Rotationssicherung und eine feste Lage des Einsatzes im unteren Gehäuseteil. Die Lagefixierung ist noch dadurch optimierbar, indem der umlaufende Flansch Durchbrüche aufweist, die kongruent angeordnet sind zu Durchbrüchen am unteren Gehäuseteil. Am oberen Gehäuseteil vorgesehene stiftförmige Fortsätze durchdringen dann den umlaufenden Flansch und greifen in die Öffnungen des unteren Gehäuseteils ein. Ergänzend kann in die Öffnungen des unteren Gehäuseteils ein Einbringen von Schraubendruckfedern erfolgen, um eine federvorgespannte Lagerung der zueinander verstellbaren Gehäuseteile sicherzustellen und die Mahleigenschaften einer derartig ausgerüsteten Vorrichtung zu verbessern.

Der erfindungsgemäße flexible, verformbare oder elastische Einsatz weist zur Durchführung der Welle des Antriebs für den rotierenden Mahlstein eine Öffnung auf, welche innerhalb einer nach innen vorstehenden Ausformung ausgebildet ist. Durch die vorstehende Ausformung kann Mahlgut nicht in den Raum für die Aufnahme der Antriebswelle gelangen und womöglich die dort befindliche, insbesondere elektromotorische Antriebsvorrichtung beschädigen. In Verbindung mit den Innenwänden des Einsatzes und der nach innen vorstehenden Ausformung wird ein seitlich begrenzter Mahlgutaufnahmeraum geschaffen, der allerdings hin zum Mahlgut leitenden, integralen Fortsatz offen ist.

Des Weiteren kann das Gehäuse-Statorteil mit elektromotorischem Antrieb Mittel zum lösbaren Arretieren des als Aufsatz ausgeführten Mahlsatzes umfassen, wobei zwischen Antriebsachse und Mahlsteinachse kraftübertragende Kupplungsmittel ausgebildet sind.

Im derartigen Mahlaufsatz ist eine Aufnahme für ein Mahlstein-Achsenlager ausgebildet, wobei der angetriebene Mahlstein mit Lager und einem der Kupplungsmittel eine Baugruppe bildet. Diese Baugruppe kann aus dem Mahlaufsatz durch Lösen einer form- und/oder kraftschlüssigen Verbindung entnommen und wieder eingesetzt werden.

Auf diese Weise ist es sehr leicht möglich, den Mahlstein auszutauschen und den verbleibenden Mahlaufsatz bzw. den Mahlstein selbst zu reinigen.

Die kraftübertragenden Kupplungsmittel sind bei einer Ausführungsform als Vieleckaußenkant- und komplementäres Vieleckinnenkantprofil ausgebildet.

Zur Verbindung zwischen dem Gehäuse-Statorteil und dem Mahlaufsatz kann auf eine an sich bekannte Bajonettverschlussanordnung oder dergleichen Lösung zurückgegriffen werden.

Der Aufgabetrichter weist ein Basisteil auf, welches eine Halterung für den drehfesten Mahlgegenstein besitzt.

Darüber hinaus weist die Halterung Rastmittel auf, welche in ein Gegenlager eingreifen, die im Mahlaufsatz integriert sind. Diese Rastmittel können z. B. stiftförmige oder bolzenartige Nasen sein, die in eine entsprechende Bohrung im Mahlaufsatz hineingleiten können.

Die Halterung für den Mahlgegenstein ist über die Rastmittel in Längsachsenrichtung der Gesamtanordnung verschieblich und erfindungsgemäß federkraftvorgespannt. Durch eine Abstandsveränderung kann dann der Mahlfeinheitsgrad eingestellt werden.

Der Siebaufsatz wird nach Entfernen des Aufgabetrichters mit Mahlgegenstein kraftschlüssig mit dem Mahlaufsatz verbunden, wobei der Siebantrieb über eine Reibungskupplung unter Nutzung der Oberfläche des angetriebenen Mahlsteins erfolgt. Ergänzende kraftübertragende Mittel sind in diesem Fall nicht notwendig.

Die Erfindung soll nachstehend anhand von Ausführungsbeispielen sowie unter Zuhilfenahme von Figuren näher erläutert werden.

Hierbei zeigen:
- Fig. 1: eine perspektivische Darstellung einer ersten Ausführungsform der Vorrichtung, hier mit einem Aufgabetrichter versehen;
- Fig. 2: eine Detaildarstellung der ersten Ausführungsform mit abgenommenem Mahlaufsatz, wobei die Oberseite des angetriebenen Mahlsteins erkennbar ist;
- Fig. 3: eine Darstellung der Unterseite des Mahlaufsatzes mit erkennbarem Mahlstein-Achsenlager sowie Kupplungsmitteln zum Lösen und Verbinden der Baugruppe aus Mahlstein und Mahlsteinlager bezogen auf deren Sitz im Mahlaufsatz gemäß erster Ausführungsform;
- Fig. 4: eine Detailansicht der Oberseite des Gehäuses (mit Antrieb) mit erkennbarem Vieleckaußenkantprofil als Antriebsachse sowie Bajonettverschlussmitteln zum Aufnehmen und Arretieren der in Fig. 3 erkennbaren Kopfbolzen an der Unterseite des Mahlaufsatzes;
- Fig. 5: eine Ansicht der Mahlvorrichtung gemäß zweiter Ausführungsform mit oberem Gehäuseteil der Mahlsteinanordnung des Mahlsatzes sowie abgenommener Kappe, die in den nicht dargestellten Aufgabetrichter übergeht;
- Fig. 6: eine Darstellung ähnlich derjenigen nach Figur 5, jedoch mit entferntem oberen Gehäuseteil, entferntem rotierenden Mahlstein und Ansicht des flexibel, verformbaren oder elastischen Einsatzes, der sich im unteren Gehäuseteil der Mahlsteinanordnung des Mahlsatzes befindet;
- Fig. 7: eine Darstellung ähnlich derjenigen nach Figur 6, jedoch mit teilweise bereits herausgezogenem flexiblem, verformbaren oder elastischen Einsatz;
- Fig. 8: eine Ansicht ähnlich derjenigen nach Figur 7, jedoch mit vollständig aus dem unteren Gehäuseteil entferntem Einsatz und
- Fig. 9: eine Detaildarstellung des Einsatzes mit integralem, Mahlgut leitenden Fortsatz.

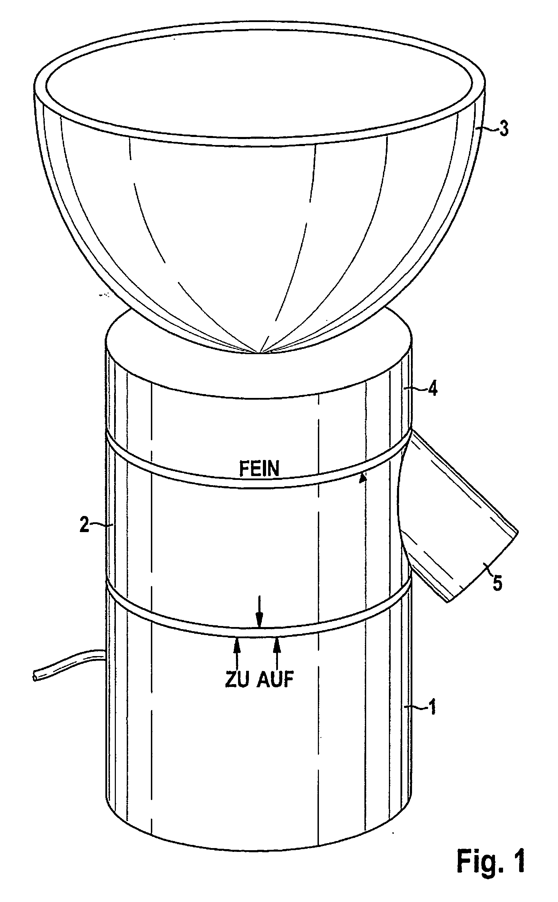

Gemäß der Darstellung nach Fig. 1 umfasst die mehrteilige universelle Mahl- und/oder Siebvorrichtung zunächst ein Statorteil 1, das einen Elektromotor oder dergleichen Antrieb aufnimmt.

Mit dem Statorteil verbindbar ist der Mahlaufsatz 2.

Oberhalb des Mahlaufsatzes 2 befindet sich der Aufgabetrichter 3, der an seiner Unterseite ein Basisteil 4 besitzt, das eine Halterung für den drehfesten Mahlstein bzw. Mahlgegenstein besitzt.

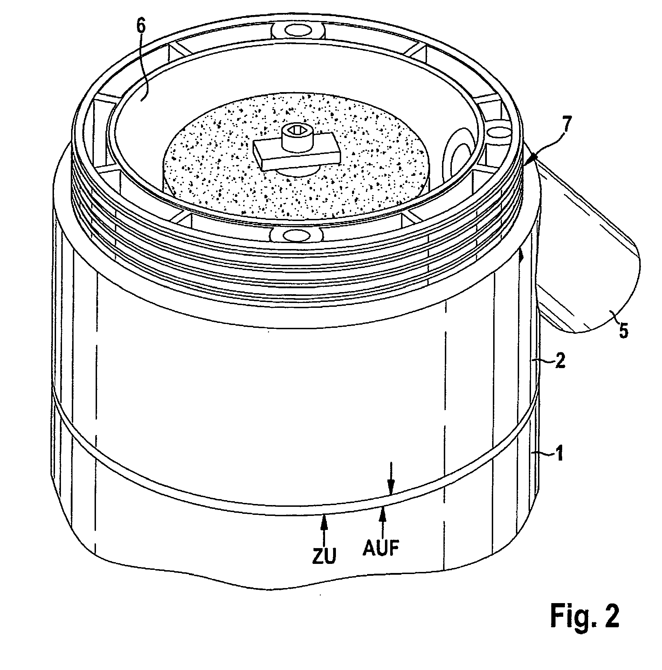

Das Mahlgut tritt über eine Schütte 5 mit entsprechender Innenöffnung aus. Die Fig. 2 zeigt eine Draufsicht auf den Mahlaufsatz mit abgenommenem Aufgabetrichter 3 und ebenso entferntem Basisteil 4, das Bestandteil des Aufgabetrichters 3 ist.

Ein Einsatz 6 befindet sich im Inneren des Mahlaufsatzes 2, wobei dieser Einsatz 6 ein Außengewinde 7 aufweist.

Dieses Außengewinde 7 ist komplementär zu einem Innengewinde im Basisteil 4 des Aufgabetrichters zum Zweck der Einstellung des Abstands zwischen dem angetriebenen und dem drehfesten Mahlstein, respektive zur Wahl der Feinheit des Mahlguts.

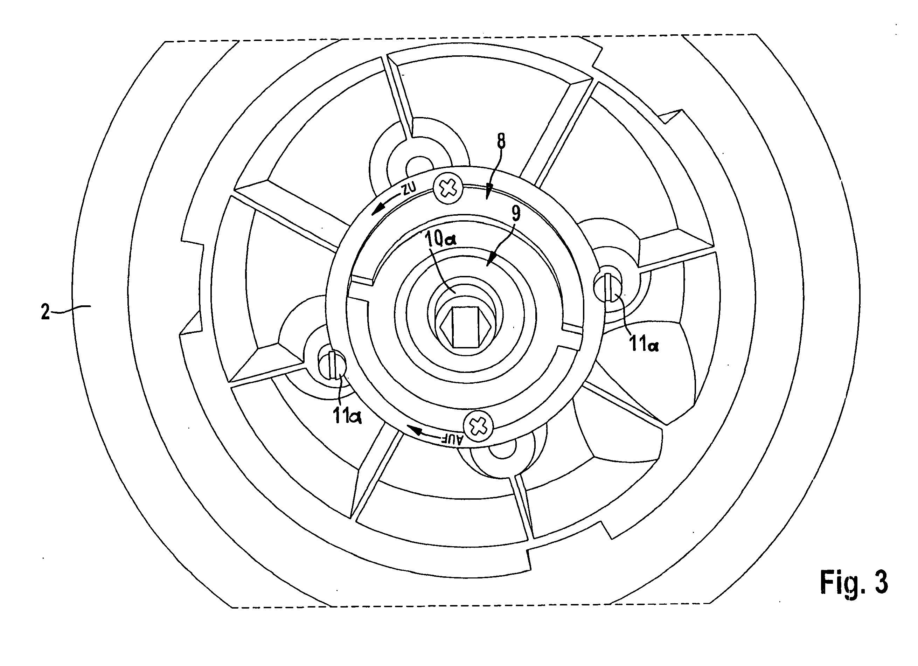

Wie in der Fig. 3 dargestellt, weist der Mahlaufsatz 2 eine Aufnahme 8 für ein Mahlstein-Achsenlager 9 auf.

Das Lager nimmt einen Achsstummel 10a auf, der über einen Innenvielkant verfügt, um eine Kraftübertragung von der Antriebsachse des Elektromotors zu bewirken.

Über die Darstellung "ZU" und "AUF" ist angedeutet, wie die Aufnahme für das Mahlstein-Achsenlager 9 verdreht werden kann, um die Aufnahme mitsamt dem Mahlstein nach oben (bezogen auf die Richtung nach Fig. 2) zu entnehmen.

Es wird damit der gesamte Mahlaufsatz frei von mechanisch beweglichen Elementen und kann spülmaschinenfest gereinigt werden. Auch ist der Mahlstein auf diese Weise leicht austauschbar und damit zugänglich.

Über die Kopfbolzen 11a kann der gesamte Mahlaufsatz mit dem Statorteil 1 verbunden werden.

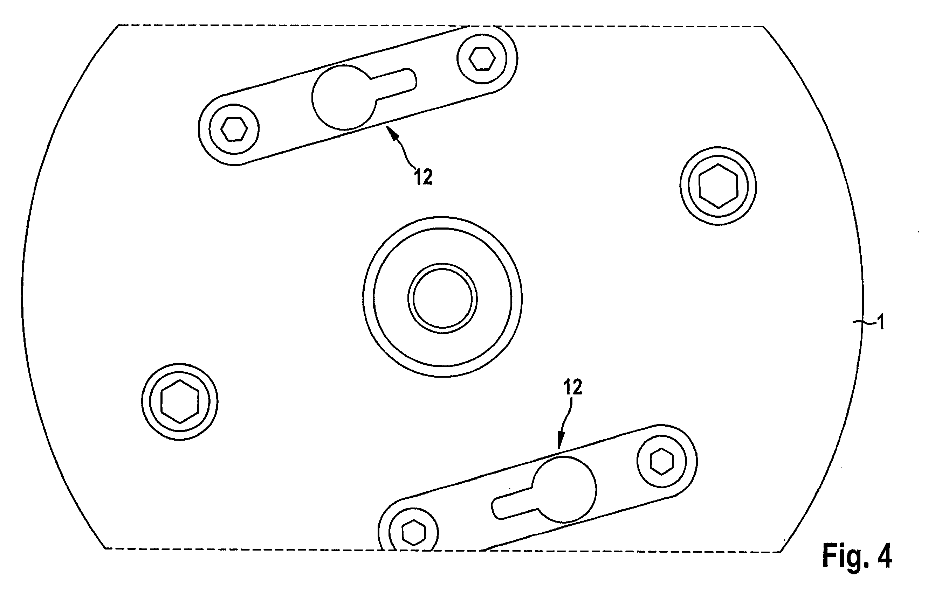

Diesbezüglich sind in der Fig. 4 zwei Bajonettverschlussöffnungen vorhanden, in die die Bolzen 11a eingreifen und durch Verdrehen arretierbar sind.

Selbstverständlich sind auch andersartige Verbindungstechniken zwischen dem Statorteil 1 und dem Mahlaufsatz denkbar, ohne den Grundgedanken der Erfindung zu verlassen.

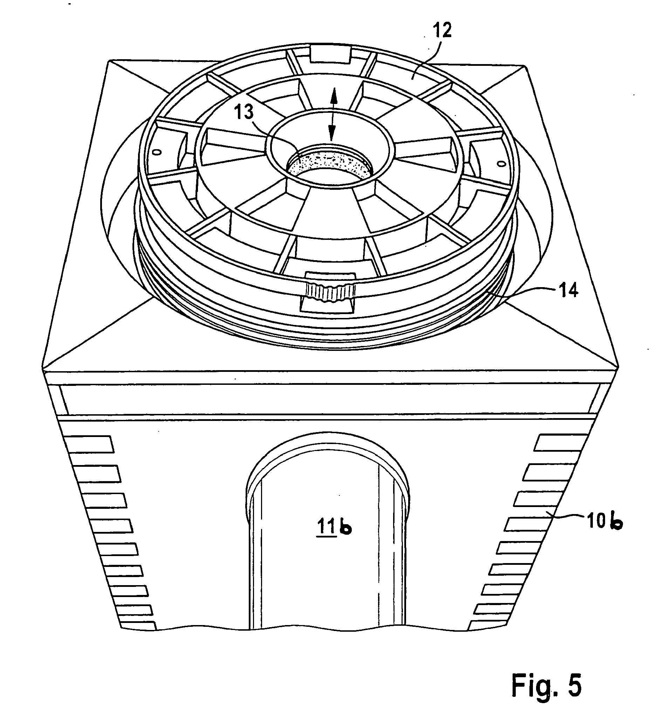

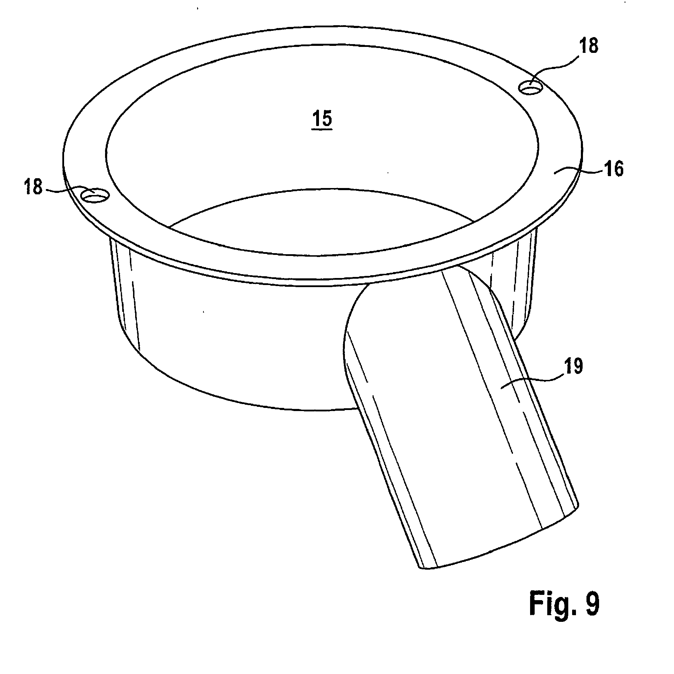

Die zweite Ausführungsform der Erfindung soll anhand der nachfolgenden Beschreibung unter Rückgriff auf die Figuren 5 bis 9 näher erläutert werden.

Bei der Darstellung einer Ausführungsform gemäß dem zweiten Ausführungsbeispiel wird von einer Mahlvorrichtung umfassend ein Gehäuse-Statorteil 10b ausgegangen.

Am Gehäuse-Statorteil 10b befindet sich ein Mahlgutaustritt 11b, der im gezeigten Beispiel als rohrförmiger Fortsatz des Gehäuses 10b ausgebildet ist. Im Inneren des Gehäuses 10b befindet sich eine elektromotorische Antriebseinheit mit einer Welle, die mit einem rotierenden Mahlstein der Mahlsteinanordnung in Verbindung steht.

Die Mahlsteinanordnung des Mahlsatzes ist in einem zweiteiligen Aufnahmegehäuse befindlich, wobei beide Gehäuseteile zur Bildung eines Mahlspaltes in axialer Richtung (Pfeildarstellung) zueinander verstellbar sind.

Das obere Gehäuseteil 12 nimmt den festen Mahlstein 13 auf, wobei sich im unteren Gehäuseteil 14 der rotierende Mahlstein befindet.

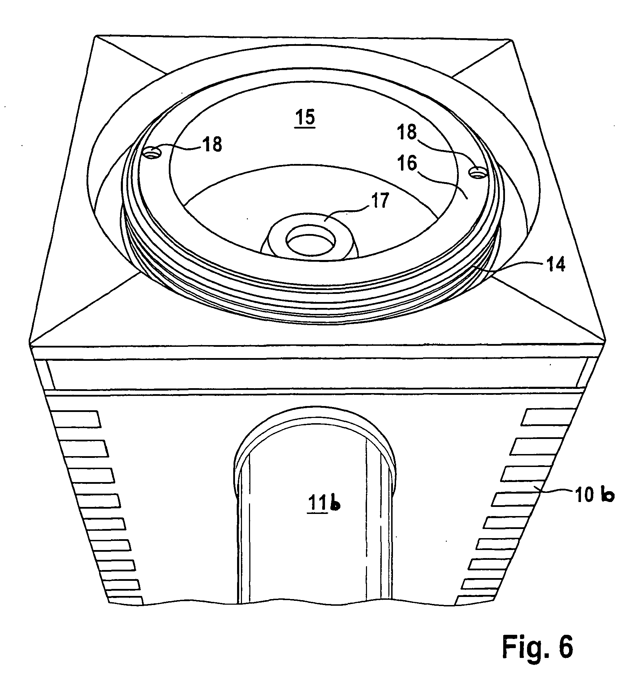

Die Darstellung nach Figur 6 zeigt wiederum das untere Gehäuseteil 14 mit entferntem rotierendem Mahlstein. Durch Entfernung des rotierenden Mahlsteins mit einem Werkzeug wird ein flexibler, verformbarer oder aus elastischem Material bestehender Einsatz 15 zugänglich.

Die Kontur des Einsatzes 15 ist im Wesentlichen dem vom unteren Gehäuseteil 14 gebildeten Hohlraum entsprechend ausgeführt.

Der Einsatz 15 weist einen umlaufenden Flansch 16 auf, welcher in Anlage mit der Oberkante des unteren Gehäuseteils 14 bringbar ist. Der Einsatz 15 weist zur Durchführung der in der Figur nicht gezeigten Welle des Antriebs für den rotierenden Mahlstein eine Öffnung auf, welche innerhalb einer nach innen vorstehenden Ausformung 17 eingebracht ist.

Durchbrüche 18 im Einsatz 15 sind kongruent zu Ausnehmungen im unteren Gehäuseteil 14 vorhanden, um Drehsicherungsstifte aufzunehmen, die sich vom oberen Gehäuseteil 12 nach unten, in Richtung des unteren Gehäuseteils 14 erstrecken.

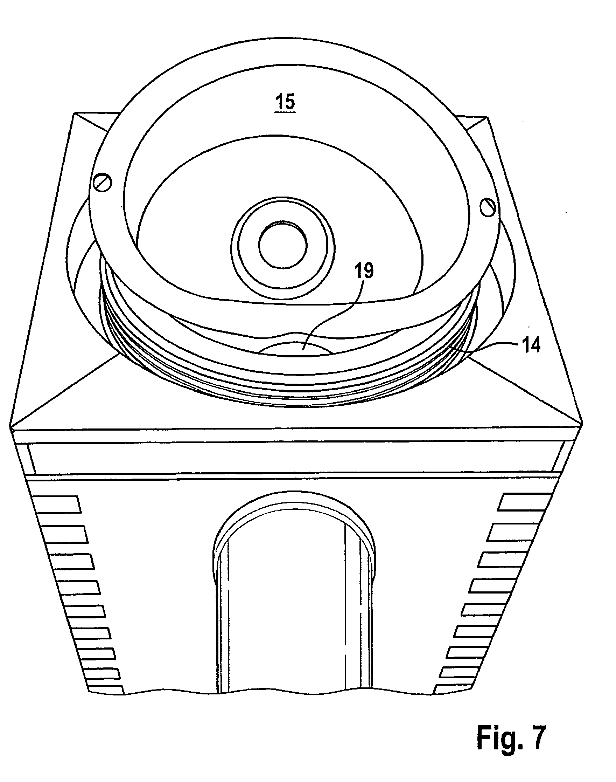

Die Figur 7 macht deutlich, wie aufgrund der Elastizität des Einsatzes 15 dieser durch von Hand ausführbare Verformung aus dem unteren Gehäuseteil 14 entnehmbar ist. Hierbei gleitet auch der Mahlgut leitende integraie Fortsatz 19 aus dem am unteren Gehäuseteil 14 ausgebildeten Mahlgutaustritt heraus.

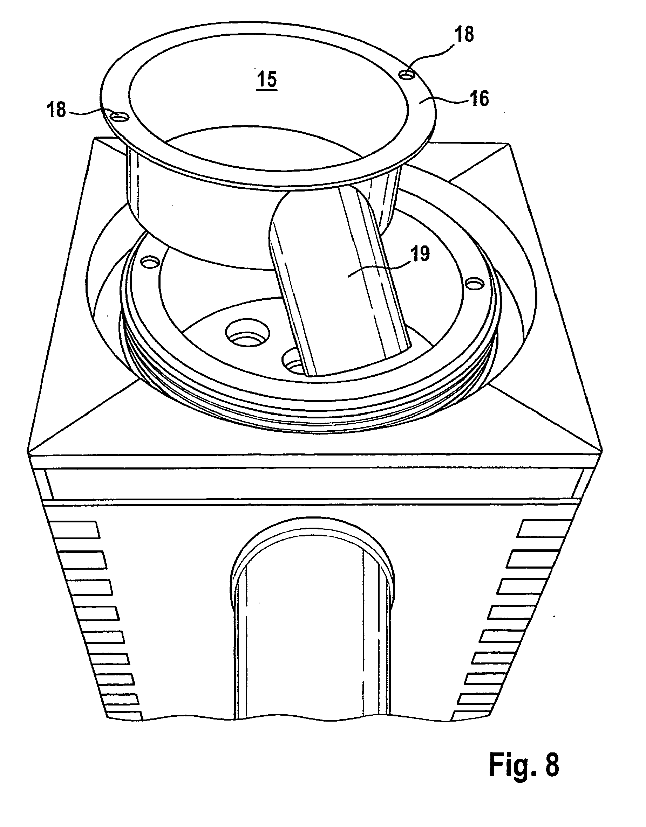

Die Figur 8 macht die Kontur des flexiblen Einsatzes 15 mit Mahlgut leitendem integralem Fortsatz deutlich.

Dieser Einsatz 15 kann leicht gereinigt und ausgetauscht werden, so dass allen hygienischen Bedingungen und Forderungen genüge getragen ist, einschließlich Einsatz der Mahlvorrichtung auch bei Allergikern möglich.

Ein Werkzeug zur Entfernung des im unteren Gehäuseteils 14 befindlichen, mit der Antriebsachse verbundenen rotierenden Mahlsteins ist z. B. derart ausgeführt, dass ein Innensechskantschlüssel mit einer Drahtschlaufe in Verbindung steht.

Nach Lösen einer Innensechskantschraube, mit deren Hilfe der rotierende Mahlstein auf der Antriebswelle befestigt ist, kann die Drahtschlaufe hinter bzw. unter dem Mahlstein eingefädelt und dieser mit Hilfe der Drahtschlaufe nach oben abgezogen werden.

## Patentansprüche

1. Mehrteilige universelle Mahl- und/oder Siebvorrichtung, umfassend ein Gehäuse-Statorteil, (10b) welches einen elektromotorischen Antrieb aufnimmt, einen Mahlsatz mit Mahlsteinanordnung und einem mit dem Mahlsatz verbindbaren Aufgabetrichter (3), weiterhin die Mahlsteinanordnung des Mahlsatzes in einem zweiteiligen Aufnahmegehäuse befindlich ist, wobei beide Gehäuseteile zur Bildung eines Mahlspaltes in axialer Richtung relativ zueinander verstellbar sind, weiterhin ein zum Antrieb gerichtetes unteres Gehäuseteil (14) den rotierenden und ein oberes Gehäuseteil (12) den festen Mahlstein (13) aufnimmt sowie mit einem am unteren Gehäuseteil (14) ausgebildeten Mahlgutaustritt, welcher mindestens teilweise das Gehäuse-Statorteil (10b) durchdringt,
**dadurch gekennzeichnet, dass**
ein aus einem flexiblen verformbaren oder elastischen Material bestehender Einsatz (15) vorgesehen ist, dessen Kontur im Wesentlichen dem vom unteren Gehäuseteil (14) gebildeten Hohlraum entspricht und welcher einen Mahlgut leitenden, integralen Fortsatz (19) umfasst, welcher in den Mahlgutaustritt mindestens teilweise hineinreicht.

2. Vorrichtung nach Anspruch 1,
**dadurch gekennzeichnet, dass**
der Einsatz (15) einen umlaufenden Flansch (16) aufweist, welcher in Anlage mit der Oberkante des unteren Gehäuseteils (14) bringbar ist.

3. Vorrichtung nach Anspruch 1 oder 2,
**dadurch gekennzeichnet, dass**
der Einsatz (15) zur Durchführung der Welle des Antriebs für den rotierenden Mahlstein eine Öffnung aufweist, welche innerhalb einer nach innen vorstehenden Ausformung (17) ausgebildet ist.

## Claims

1. Multi-part universal grinding and/or screening device, comprising a housing stator part (10b) receiving an electromotive drive, a grinding attachment including a grinding stone assembly and a feeding hopper (3) connectable to the grinding attachment, the grinding stone assembly of the grinding attachment being located in a two-part receiving housing, wherein both housing parts can be adjusted relative to each other in an axial direction to form a grinding gap, wherein further a lower housing part (14) directed toward the drive receives the rotating and an upper housing part (12) receives the fixed grinding stone (13), and comprising a ground material outlet formed on the lower housing part (14) and penetrating at least partially the housing stator part (10b),
**characterized in that**
an insert (15) made of a flexible deformable or elastic material is provided, whose contour substantially corresponds to the hollow space defined by the lower housing part (14) and which comprises an integral prolongation (19) conducting the ground material and extending at least partially into the ground material outlet.

2. Device according to claim 1,
**characterized in that**
the insert (15) has a surrounding flange (16) which can be brought into contact with the upper edge of the lower housing part (14).

3. Device according to claim 1 or 2,
**characterized in that**
the insert (15) has an opening for passing through the shaft of the drive for the rotating grinding stone, the opening being formed within a molding (17) projecting to the inside.

## Revendications

1. Dispositif de broyage et/ou de criblage universel en plusieurs parties, comprenant une partie de boîtier formant stator (10b) qui loge un entraînement à moteur électrique, un mécanisme de broyage avec un agencement de meules de broyage et un entonnoir de sortie (3) susceptible d'être relié au mécanisme de broyage, dans lequel l'agencement de meules de broyage du mécanisme de broyage se trouve dans un boîtier récepteur en deux parties, dans lequel les deux parties de boîtier sont déplaçables l'une par rapport à l'autre en direction axiale pour former un intervalle de broyage, dans lequel une partie de boîtier inférieure (14) orientée vers l'entraînement reçoit la meule de broyage en rotation et une partie de boîtier supérieure (12) reçoit la meule de broyage fixe (13), et comprenant une sortie de produit broyé réalisée à la partie de boîtier inférieure (14), sortie qui traverse au moins partiellement la partie de boîtier formant stator (10b),
**caractérisé en ce que**
il est prévu un insert (15) constitué en un matériau déformable flexible ou en un matériau élastique, dont le contour correspond essentiellement à la cavité formée par la partie de boîtier inférieure (14) et qui inclut un prolongement intégral (19) guidant un produit broyé, ce prolongement pénétrant au moins partiellement dans la sortie de produit broyé.

2. Dispositif selon la revendication 1,
**caractérisé en ce que** l'insert (15) comprend une bride périphérique (16) qui peut être amenée en contact avec l'arête supérieure de la partie de boîtier inférieure (14).

3. Dispositif selon la revendication 1 ou 2,
**caractérisé en ce que**,
pour la traversée de l'arbre de l'entraînement pour la meule de broyage en rotation, l'insert (15) comporte une ouverture qui est ménagée à l'intérieur d'une conformation (17) en saillie vers l'intérieur.
